(19) Europäisches Patentamt

European Patent Office

Office européen des brevets

(11) EP 1 225 968 B1

(12) **EUROPEAN PATENT SPECIFICATION**

(45) Date of publication and mention
of the grant of the patent:
**05.04.2006 Bulletin 2006/14**

(51) Int Cl.:
*B01D 61/14* *(2006.01)*    *B01D 61/58* *(2006.01)*

(21) Application number: **99944277.5**

(22) Date of filing: **17.09.1999**

(86) International application number:
**PCT/DK1999/000496**

(87) International publication number:
**WO 2001/021290 (29.03.2001 Gazette 2001/13)**

(54) **A METHOD AND AN APPARATUS FOR CONTINUOUS CROSS-FLOW DIAFILTRATION**

VERFAHREN UND VORRICHTUNG ZUR KONTINUIERLICHEN KREUZFLUSS-DIAFILTRATION

PROCEDE ET APPAREIL DESTINES A LA DIAFILTRATION CONTINUE PAR ECOULEMENT CROISE

(84) Designated Contracting States:
**AT BE CH CY DE DK ES FI FR GB GR IE IT LI LU MC NL PT SE**

(43) Date of publication of application:
**31.07.2002 Bulletin 2002/31**

(73) Proprietor: **ALFA LAVAL NAKSKOV A/S
4900 Nakskov (DK)**

(72) Inventor: **MADSEN, Rud, Frik
DK-4900 Nakskov (DK)**

(74) Representative: **Olsen, Lars Pallisgaard et al
Zacco Denmark A/S
Hans Bekkevolds Allé 7
2900 Hellerup (DK)**

(56) References cited:
**EP-A2- 0 878 229         GB-A- 1 492 090
GB-A- 2 263 856         US-A- 4 420 398**

**Description**

1. BACKGROUND OF THE INVENTION

The present invention relates to a method and an apparatus of continuous cross-flow diafiltration of a solution containing large and small molecules wherein the solution is continuously flowing over a semipermeable membrane and separating into a concentrated solution and a filtrate, and wherein a diafiltration liquid is added to the solution.

The technical Field

Cross-flow filtration of a solution is a known filtering process. The solution to be filtered is flowing under pressure and with a fairly high velocity across the surface of a semipermeable membrane. Solvent and dissolved substances enter into the membrane. A part the solvent and dissolved substances penetrate through the membrane and the rest thereof leaves the membrane. The solution flowing across the membrane becomes concentrated with molecules which cannot pass the membrane, or with molecules which can only pass the membrane with difficulties, such molecules being e.g. macromolecules, microsuspensions, or microemulsions.
In the present context it is intended that the term "solution" includes solutions, suspensions and emulsions which can be filtered in a cross-flow membrane filtration process.
Cross-flow filtration can be performed in a batch process. The concentrated solution is recirculated back under pressure through the semipermeable membrane to the container containing the concentrate, and the filtrate is conducted to a filtrate container.
Once the concentrated solution has achieved a certain concentration, diafiltering can be initiated by addition of a diafiltration liquid to the concentrated solution in the concentration container, or by addition of the diafiltration liquid to the inlet of the membrane filter. In most cases the diafiltration liquid is a pure solvent such as pure water. Concurrent with the addition of diafiltration liquid diluting the concentrated solution, the filtering of the solution is continued whereby the concentration of substances with low molecular weight in the concentrate is reduced. This process is called diafiltering.
Once diafiltering has been finished, the concentrated solution is often post-concentrated in order to obtain the highest possible concentration of large molecules in the concentrate.
The purpose of performing cross-flow filtration by means of membranes which are permeable to smaller molecules but which retain larger molecules is in most cases to separate the large molecules, e.g. macromolecules such as colloids from the smaller molecules. However, concentration of a solution containing both large and small molecules by means of such membranes does not provide a complete separation between the two types of molecules, because the degree of concentration is limited by the viscosity, the osmotic pressure, or the solubility of the large molecules which are retained.
For example, starting with a protein solution containing 2% protein and 5% salt and sugars, a pure membrane filtration (ultrafiltration) of the solution on a membrane having a 100% retention of protein and a 100% passage of salts and sugars could only separate the solution in a 90% filtrate (so-called permeate) having a content of 5% salts and sugars and 0% protein, and a 10% concentrate having a content of 5% salts and sugars and 20% protein.
It is often necessary to remove a large amount of the small molecules, in this case salts and sugars, from the concentrate either because a more pure solution of macromolecules is desired or because a large yield of small molecules in the filtrate is desired.
For this purpose it is known to add a diafiltration liquid to the concentrated solution, which liquid is the solvent of the solution in most cases e.g. pure water optionally containing substances which improves or stabilizes the filtration process, and then continue the filtration process to bring more low molecular weight substances over in the filtrate.
In a batch diafiltration process using a membrane having a 100% retention of macromolecular substances, a 100% penetration of low molecular substances, the amount of diafiltration liquid required at a constant volume is estimated from the following expression:

$$V = V_0 \ln \frac{c_0}{c}$$

where V is the volume of diafiltration liquid, $V_0$ is the volume of concentrated solution, c is the final concentration of low molecular substances, and $C_0$ is the initial concentration of low molecular substances.
This means that in order to reduce the concentration of low molecular weight substances in the concentrated solution to 1/10 of the initial concentration, an amount of diafiltration liquid which is about 2.3 times as large as the volume of the concentrated solution is to be used.

In a continuous process the amount of diafiltration liquid is even larger. In order to achieve a similar result in a diafiltration process comprising three filter stages, an amount of diafiltration liquid of about 2.84 times the volume of the concentrate solution has to be used. This amount of diafiltration liquid decreases by increasing number of filter stages in the diafiltration system, but the amount does not become smaller than the amount used in a batch diafiltration process, even if a very large number of filter stages is applied.

Consequently, since the diafiltration liquid is often very expensive, e.g. very pure water can only be produced by highly energy consuming and costly separation processes, there is a need to avoid this disadvantage of the prior art techniques.

Prior art disclosures

Evaporation, membrane filtration and spray drying in milk powder and cheese production, edited by Robert Hansen, Rud Frik Madsen, Keith Masters, Bernhard Wiegand, North European Dairy Journal, ISBN 87-7477-000-4.

EP-A2-0 878 229 discloses a method for removal of high-molecular compounds from a process stream in a unit comprising different filter stages which are successively closed. Each closed stage is drained and subjected to diafiltration and washing, the washing liquid leaving one stage is used in the next stage. There is no counter current of solution and diafiltration liquid.

2. DISCLOSURE OF THE INVENTION

Object of the Invention

It is an object of the present invention to seek to provide an improved method and apparatus for cross-flow diafiltration of a solution containing large and small molecules.

It is a further object of the present invention to seek to provide such a method and apparatus wherein the amount of diafiltration liquid is reduced.

It is a still further object of the present invention to seek to provide such a method and apparatus which are more cost effective than prior art techniques for similar performance.

It is a still further object of the present invention to seek to provide a filtrate collecting and recirculating manifold for use in such a method and apparatus.

Solution According to the Invention

According to an aspect of the present invention there is provided a method of cross-flow diafiltration of a solution containing large and small molecules, as claimed in claim 1.

It surprisingly turns out that according to the invention the required amount of diafiltration liquid can be reduced compared to prior art diafiltration methods.

This has great advantages in industrial applications.

Thus, if the diafiltration liquid is water, very pure water is often required. However, very pure water is very expensive and requires purification of less pure water by energy consuming and costly separation processes such as distillation processes and reverse osmosis. The present invention reduces the amount of required diafiltration water.

Further, in almost all applications of the filtrate from a diafiltration process, the low molecular weight substances have to be concentrated, or the filtrate has to be purified in another way before the filtrate can be used. The costs involved in these concentraticn processes is often approximately proportional to the amount of liquid involved in the process. The present invention reduces the amount of permeate.

According to the present invention diafiltration is performed in a kind of countercurrent extraction wherein a diafiltration liquid, preferably a pure diafiltration liquid, is added to a suitable filter stage of the filtering system, preferably downstream of a series of filter stages, and the filtrate of this filter stage, or a part thereof, is added to a previous filter stage.

In a preferred diafiltration system having more than two filter stages comprising at least one diafiltering stage, filtrate is directed from a diafiltering stage to a filter stage further upstream of the diafiltering stage whereby a capacity of handling large flow of liquid is obtained.

In a preferred embodiment, the receiving filter stage is adjacent to the diafiltering stage whereby a simplification of the system is obtained.

In another preferred embodiment, the receiving filter stage is further stages away from the diafiltering stage which may reduce the filtering efficiency compared to the preferred method of the diafiltering stage and the filter stage being adjacent to each other. However, in the case that different amounts of filtrate is circulated back to different previous filter stages, this embodiment may be preferred. Also, the pumps chosen can more easily be optimized, in particular in large systems using standard components.

The amount of filtrate circulated from a diafiltering stage to a filter stage can be any suitable amount.

In a preferred embodiment, the total amount of filtrate is circulated from a diafiltering stage to a previous stage.

However, a smaller amount of filtrate can be circulated to the previous step. In this case the rest of the filtrate can be collected in a filtrate container, or it can be used for any other purposes, e.g. to be circulated to one or more previous filter stages in order to obtain a suitable mass balance e.g. to optimize the performance of individual filter stages or of the total filtering process.

The combination of diafiltering stages and receiving filter stages can be repeated any number of times if desired in order to optimize the total filtering process for a particular application.

## 3. BRIEF DESCRIPTION OF THE DRAWINGS

In the following, by way of examples only, the invention is further disclosed with detailed description of preferred embodiments. Reference is made to the drawings in which

Fig. 1 shows a diagrammatic sketch of a cross-flow diafiltering system according to the prior art;

Fig. 2 shows an enlarged filtration loop of the prior art system shown in Fig.1;

Fig. 3 shows a diagrammatic sketch of a cross-flow diafiltering system according to a first preferred embodiment of the present invention;

Fig. 4 shows a diagrammatic sketch of a cross-flow diafiltering system according to a second preferred embodiment of the present invention; and

Fig. 5 shows a diagrammatic sketch of a cross-flow diafiltering system according to a third preferred embodiment of the present invention.

Detailed description of prior art

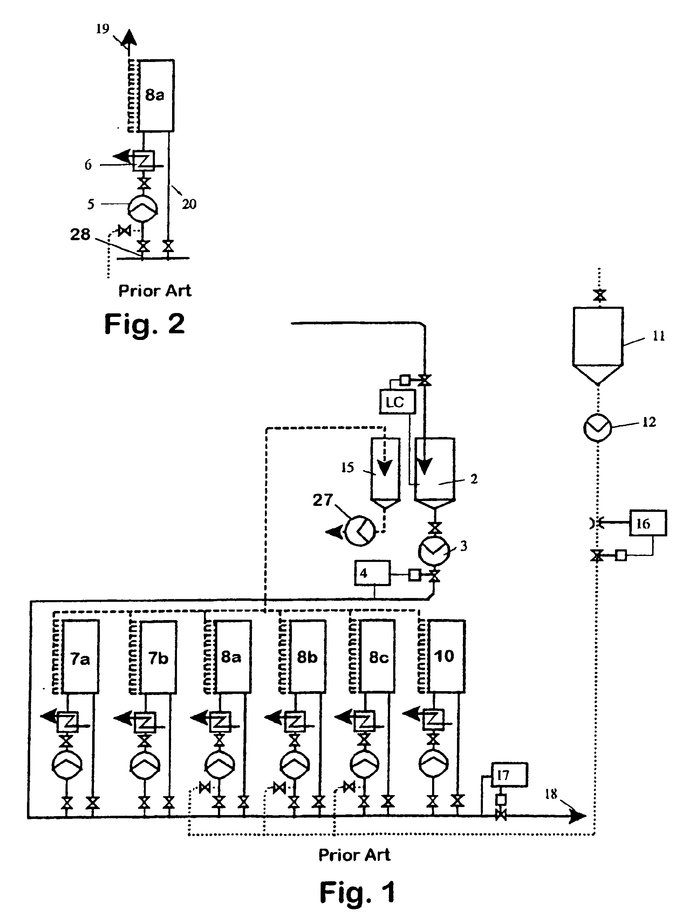

Cross-flow diafiltering performed in a continuous concentrator system according to the prior art is shown in Figs 1 and 2.

Referring first to Fig. 1, the solution to be filtered is entered at the inlet 1 into a tank 2 equipped with means LC for controlling the level therein wherefrom the solution is conducted through a pressure and flow control means 4 controlling the pressure and/or the flow of the solution by means of pump 3. The solution then enters a series of filter stages with respective filters 7a, 7b, 8a, 8b, 8c, and 10.

As shown in details in Fig. 2, each filter stage comprises a pump 5, optionally a heat exchanger 6 for regulating the temperature, and one or more membrane filters 7a, 7b, 8a, 8b, 8c, or 10 in the respective filter stages. The concentrated solution is conducted from the membrane filter to the feed line 26 through the conduit 20. Generally, the concentrated solution is divided into a part which is recirculated to the filter stage and into a part which is diverted to the next filter stage. Generally, most of the concentrated solution is recirculated and a smaller part is diverted to the next filter stage.

The filtrate leaves the filter at 19, and is directed to a filtrate tank 15, from where it is discharged by pump 27.

The first and the second filter stages 7a, 7b concentrate the macromolecules in the solution as a filtrate containing the smaller molecules in almost the same concentration as the solution is filtered off.

In the filter stages 8a, 8b, 8c a diafiltration liquid from the container 11 is added through a pump 12 and a flow controlling valve 16.

In each diafiltering stage 8a, 8b, 8c of the diafiltration system, an amount of diafiltration liquid is added; typically in an amount of the same order as the amount of filtrate from the same filter stage whereby the concentration of macromolecules is kept fairly constant in the concentrated solution and the concentration of the low molecular weight substances is reduced. After a suitable number of diafiltering stages, the rest of the concentrated solution can optionally be concentrated further in one or more post-concentration filter stages 10. The final concentrated solution leaves the filtering system at 18 through a control valve 17.

Detailed description of the preferred embodiments

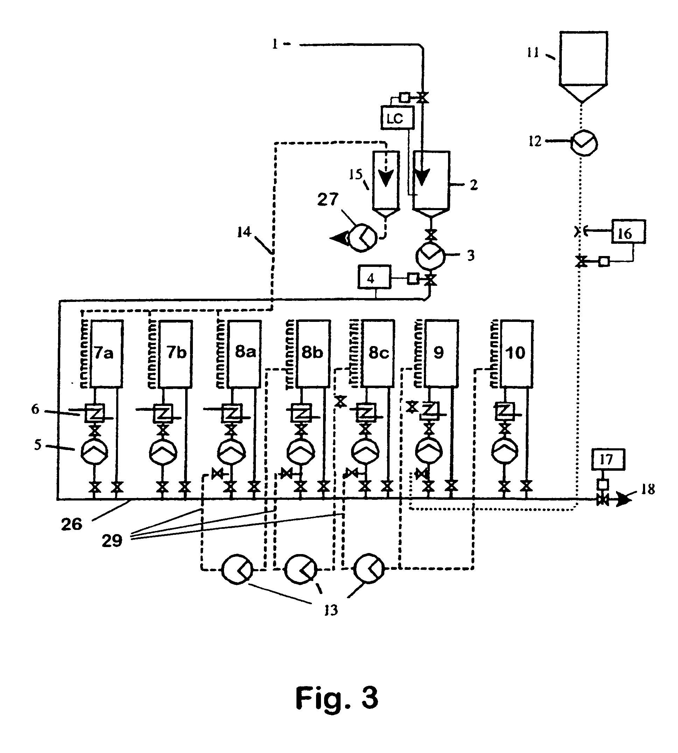

Fig. 3 shows a diagrammatic sketch of a filtering apparatus according to a first preferred embodiment of the present invention, here a cross-flow diafiltration system 31. The solution to be filtered by flowing across a membrane enters a container 2 at the inlet 1. The solution is pumped by means of pumps 3 through a pressure and/or flow control valve 4 to a series of membrane filter stages with respective filter 7a, 7b, 8a, 8b, 8c, 9 and 10, each comprising a respective circulating pump 5, optionally a heat exchanger 6 for heating or cooling, and a respective membrane filter 7a, 7b, 8a, 8b, 8c, 9 or 10 and back to the common conduit 26. The amount of liquid circulated by each of the pumps 5 is generally much larger than the amount pumped by the pump 3. In the first membrane filtering stages wherein the membrane filters are marked 7a, 7b, a concentration of the large molecules is performed. The filtrate containing small molecules leaves the filters through conduit 14 and is collected in the filtrate tank 15 wherefrom it is pumped out to leave the system by pump 27.

In the loop wherein the filter is marked 8a, filtrates from the subsequent filters 8b, 8c, 9, 10 are added through one of the pumps 13. The addition can be either as shown directly at an inlet to the pump 5 or at any other location in the loop 8a, or in the inlet conduit between this loop and the previous loop. Filtrate from this loop 8a can be merged with the filtrate from the previous filters 7a, 7b through the conduit 14 into the tank 15. In the loops, wherein the filters are marked 8b, 8c, the filtrates from the respective subsequent filters are added to the respective preceding loop in a similar way, e.g. in a location close to the pump 5, and the filtrate from the filter is added to the previous filter by one of the pumps 13. To the loop with the filter 9, the pure diafiltration liquid is added from a tank 11 by means of pump 12 through a control valve 16. Filtrate from filter 9 is transferred by one of the pumps 13 into the loop marked 8c or just before this loop. After the final diafiltering loop 9, one or more final concentrating filters 10 can be located. The filtrate from these filters can either be directed back to the penultimate diafiltering loop 9 or to the filtrate tank 15.

By using this approach it is achieved that it is only the filtrate from module 8a which dilutes the total filtrate. This is different from the traditional method wherein the filtrate from all the diafilters are directed to the filtrate container; in the present case the filtrate according to the prior art would have been collected from four filters and directed to the filtrate container 15.

In the loop with the filter marked 10, a post-concentration is performed after which the final concentrate leaves the system through the control valve 17.

Depending on the expected concentration of the initial product the preconcentration module 7a, 7b may or may not be included in the system. The concentration of the macromolecules, at which the diafiltering takes place, depends on the ratio between the concentration and the filtration velocity; said filtration velocity normally decreasing by increasing concentration. Dependent on the concentration, at which diafiltering takes place, it is determined whether a postconcentration is necessary or not. The use of diafiltration liquid decreases with increasing concentration of macromolecules in the diafiltering modules but since the filtering velocity often decreases heavily with concentration, it is often preferred to diafilter at a lower concentration than the maximum achievable concentration. The loops marked 8a and 9 are required for the method according to the present invention, whereas it is an economical question whether additional loops as those having filters marked 8b, 8c should be installed and how many.

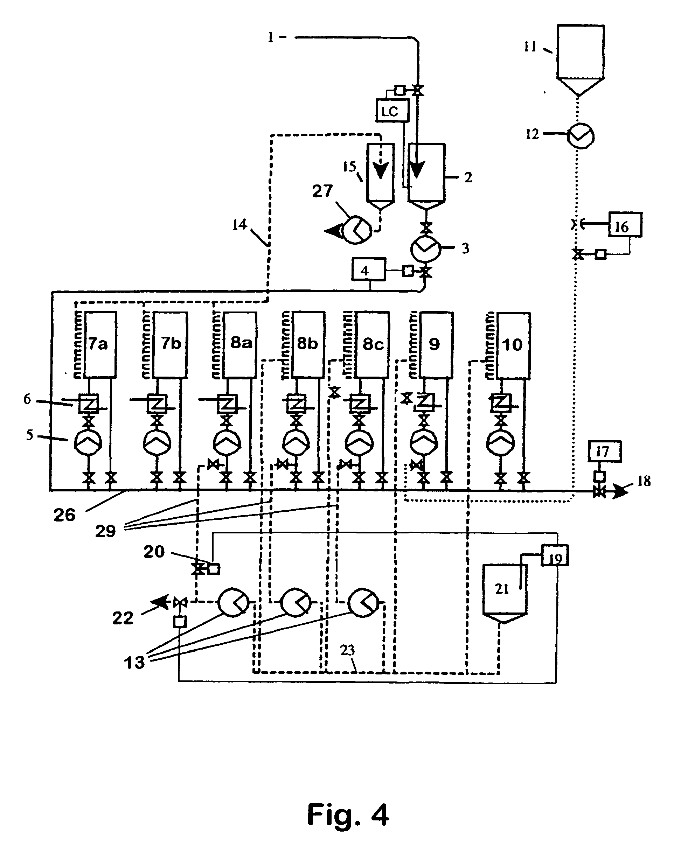

In some applications it is not certain whether all diafiltering filters have a constant and somewhat similar filtration velocity. In case of expected variations, it may be preferred to modify the system according to Fig. 3 into the system depicted in Fig. 4. The system 32 according to Fig. 4, which represents the second preferred embodiment, is mainly modified in respect of the means for providing diafiltration liquid and returning filtrate. In the system in Fig. 4, the filtrate is collected from all the filters marked 8, 9 and 10 in a manifold 23. This manifold is connected to a container 21. The container is provided with a level control, the valve 20, which adds liquid to the first diafiltering module in case of low level inside the container 21. If the level in the container 21 is too high, the level control opens the valve 22, which discharges excess of liquid either to the filtrate container 15 or into the last concentration stage with the filter 7b which is a partial diafiltering. The respective pumps 13 sucks liquid from the manifold such that the respective filter stages receive liquids which are filtrates from the respective previous filter and is only supplied with a further liquid, if necessary.

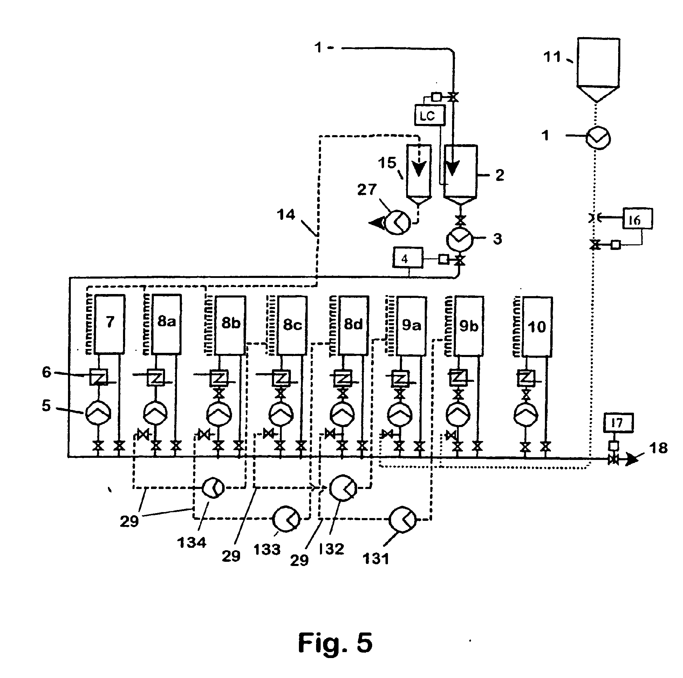

A third embodiment of the system according to the present invention is shown in Fig. 5. The principle in this system 33 is the same as for the system shown in Fig. 3. This system comprises just one preconcentration module 7a and six diafiltering modules 8a, 8b, 8c, 8d, 9a, 9b. In this system, the diafiltering is designed such that a fresh diafiltration liquid is added to the stage with the filter 9a as well as to the stage with the filter 9b. The filtrate from the filter 9b is pumped into the stage with the filter 8d with pump 131 and the filtrate from the loop with filter 9a is pumped into the loop with filter 8c with pump 132. The filtrate from the filter 8d is pumped into the stage with the filter 8b with pump 133and the filtrate from the filter 8c into the stage with filter 8a with the pump 134.

Modifications of the third embodiment may comprise a higher or a smaller number of diafiltration stages. In other modifications, the filtrate and the diafiltering pump additions may be merged in a single manifold similar to the principle shown in Fig. 4.

Equivalent designs can be performed in case fresh diafiltration liquid is directed initially to three or more filters and then the filtrates from these filters are directed into the loops of the previous filters in sequence.

Control of the amounts of liquids is important in order to obtain a successful diafiltering. The amount of concentrate which is removed from the system through the valve 17 can either be controlled by a concentration meter, e.g. a measurement of density or refractive index provided in the last loop before discharge, or it can be regulated proportionally with the amount of solution which is fed into the valve 4. The total amount of new diafiltration liquid can either be controlled by a concentration meter in the filtrate from the last diafiltering module or it can be regulated such that it becomes proportional to the flow of concentrate.

In still further preferred embodiments, the control means is adapted to maintain the mass balance in the system. The control means may comprise suitable computer programs and computers for controlling flows and pressure by controlling valves and pumps. A flow meter is placed in the conduit between the last loop of type 8 (i.e. 8d) and the first of type 9 and a second flow meter is located between the last loop of type 9 and the first of type 10. The total amount of fresh diafiltration liquid is controlled such that the two flows are either equal or in the same proportion. Addition of solution to the total system can be controlled such that it is proportional to the all of these flows or the discharge flow from the last module of the system.

## 5. EXAMPLES

### Example 1: Diafiltering of skimmed milk

*Solution* to be *filtered*

1000 liter of protein solution per hour having a content of 2.0% protein, here diluted skimmed milk, and 5% low molecular substance, here milk salts and sugars, was ultrafiltered to a content of 20% protein.
The 20% protein solution was used as the solution to be filtered in the various examples. In all examples the solution was diafiltered until the protein solution had a purity of 98% protein.

*Membrane*

The membrane used in the examples was a polysulfon membrane GR 61 supplied from Danish Separation Systems A/S, Nakskov, Denmark. It had 100% retention of protein. The content of low molecular weight substances in the filtrate was 95% of the content in the concentrated solution in the same filter stage in the system.
The membrane area required was determined by the required number of DSS module 39 membranes each having an area of 0.2 m$^2$ to provide the 98% protein target value in the diafiltered solution.

*Diafiltration liquid*

As diafiltration liquid was used pure water obtained by distillation of tap water. Pure water produced by reverse osmosis or condensed water vapour could also have been used.
Filtering in continuous filtering systems according to the present invention having 3 preconcentration filter stages and from 2 to 10 diafiltering stages was performed and compared with filtering in a continuous filtering systems being supplied with pure diafiltration liquid to all filter stages. Further, filtering in a batch filtering system was performed. The results are shown in Tables 1-3.
In both the continuous systems, preconcentration was performed in three steps.
Diafiltering was performed at a pressure of 2-3 bar.
The filtering velocity is described by the following formula:

$$ J = K * \frac{\left(1 - \dfrac{c}{c_g}\right)}{\left(1 + A\dfrac{c}{c_g} + B\left(\dfrac{c}{c_g}\right)^2\right)} $$

wherein J is the filtering velocity in liters per m$^2$ membrane area and time, c is concentration of protein, $c_g$, K, A, and B are constants which depend on the product; in this case $c_g$ = 32.6%, K = 48.17, A = 1.1806, and B = 0.2574.
After concentration to 20% protein, the concentrated solution in the continuous systems contained 5.16% low molecular weight substances. The concentrated solution from the batch process contained 5.23% low molecular weight substances.
By diafiltering with different numbers of filter stages, the following amounts of pure diafiltration liquid and membrane areas were found:

Table 1 Continuous diafiltering in a preferred embodiment

| Number of diafilter stages | m² filter per filter stage | m² in total | Dialiquid supply per filter stage l/h | Dialiquid supply in Total 1/h |
|---|---|---|---|---|
| 2 | 29.7 | 59.5 | 304 | 304 |
| 3 | 18.6 | 55.9 | 191 | 191 |
| 4 | 14.8 | 59.3 | 152 | 152 |
| 5 | 13.0 | 65.0 | 133 | 133 |
| 10 | 10.3 | 102.7 | 105 | 105 |

Table 2 Continuous diafiltering according to prior art

| Number of diafilter stages | m² filter per filter stage | m² in total | Dialiquid supply per filter stage 1/h | Dialiquid supply in Total l/h |
|---|---|---|---|---|
| 2 | 25.8 | 51.6 | 264 | 529 |
| 3 | 13.4 | 40.2 | 137 | 412 |
| 4 | 8.9 | 35.7 | 91 | 365 |
| 5 | 6.7 | 33.3 | 68 | 340 |
| 10 | 2.9 | 29.7 | 30 | 297 |

Table 3 Batch diafiltering

| m² diafiltering | Dialiquid supply in total 1/h |
|---|---|
| 25.8 | 264 |

As seen from Tables 1-3, the use of e.g. 3 diafiltering stages in a continuous filtering system according to the preferred embodiment uses 191 liter diafiltration liquid pr hour pr filter stage. The corresponding use for the prior art continuous filtering system was 412 liter pr hour. The required membrane area is 55.9 m² compared to 40.2 m² for the prior art continuous filtering system.

Example 2

A similar filtering as described in example 1 was performed with the exception that fresh diafiltration liquid was added to two previous filter stages as shown in Fig. 4. The necessary filtering area and amount of diafiltration liquid is shown in Table 4.

Table 4

| Number of diafilter stages | m² filter per filter stage | m² in total | Dialiquid supply per filter stage l/h | Dialiquid supply in Total 1/h |
|---|---|---|---|---|
| 4 | 10.3 | 41.2 | 105 | 210 |
| 6 | 7.4 | 44.5 | 76 | 152 |
| 10 | 5.8 | 57.5 | 59 | 118 |

In this another embodiment using e.g. for 4 diafiltering stages, the required amount of diafiltration liquid is 210 1/h compared to 365 1/h for the prior art filtering system. The required filtering area was 41.2 m² compared to 35.7 m² for the prior art system.

Example 3: Filtering of cephalosporin solution

1000 1 solution containing 1% cephalosporin is diafiltered with a diafiltration liquid, here sterile water with a low bacterial count, in a continuous filtering system according to a preferred embodiment using a FS 600 membrane supplied from DSS so that 99% of the cephalosporin in the solution arrives in the filtrate or permeate. The filtrate contains 97% of the cephalosporin concentration in the solution to be diafiltered. The average filtering velocity is 25 l/m$^2$h.

Table 5 Diafiltering according to a preferred embodiment

| Number of diafilter stages | m$^2$ filter per filter stage | m$^2$ in total | Dialiquid supply per filter stage l/h | Dialiquid supply in Total l/h |
|---|---|---|---|---|
| 2 | 390 | 780 | 9750 | 9750 |
| 3 | 175 | 526 | 4380 | 4380 |
| 4 | 117 | 469 | 2929 | 2929 |
| 5 | 92 | 461 | 2303 | 2303 |
| 10 | 58 | 578 | 1446 | 1446 |

Table 6 Continuous diafiltering according to prior art

| Number of diafilter stages | m$^2$ filter per filter stage | m$^2$ in total | Dialiquid supply per filter stage 1/h | Dialiquid supply in Total l/h |
|---|---|---|---|---|
| 2 | 371 | 742 | 9287 | 18557 |
| 3 | 150 | 450 | 3754 | 11262 |
| 4 | 89 | 357 | 2229 | 8916 |
| 5 | 62 | 312 | 1558 | 7793 |
| 10 | 24 | 241 | 603 | 6030 |

Table 7 Batch diafiltering

| m$^2$ diafiltering | Dialiquid supply in total l/h |
|---|---|
| 193 | 4821 |

It is seen that use of 4 diafiltering stages in the preferred embodiment requires 2929 1 diafiltration liquid per hour. The prior art filtering system correspondingly requires 8916 1 diafiltration liquid.

Consequently, according to the preferred embodiment an amount of 5987 1 per hour diafiltration liquid corresponding to the difference between the required diafiltration liquids in the two methods would not have to be removed from the purified cephalosporin solution which is energy and costs saving. However, a membrane area of 469 m$^2$ is required for the preferred embodiment compared to 357 m$^2$ for the prior art method.

This should be compared to a membrane area of 193 m$^2$ and a required diafiltration liquid of 4821 1 per hour for a batch filtering system.

Example 4

The solution is the same as in example 3. The filtering system is using addition of diafiltration liquid to two filter stages (as shown in Fig. 4).

Table 8 Diafiltering according to a preferred embodiment

| Number of diafilter stages | m$^2$ filter per filter stage | m$^2$ in total | Dialiquid supply per filter stage l/h | Dialiquid supply in Total 1/h |
|---|---|---|---|---|
| 4 | 95 | 375 | 2344 | 4688 |

Table continued

| Number of diafilter stages | m$^2$ filter per filter stage | m$^2$ in total | Dialiquid supply per filter stage l/h | Dialiquid supply in Total 1/h |
|---|---|---|---|---|
| 6 | 56 | 334 | 1391 | 2782 |
| 10 | 36 | 359 | 896 | 1792 |

It is seen that this preferred embodiment requires 1792 1 diafiltration liquid per hour for 10 diafiltering stages whereas the prior art method requires 6030 1/h. The membrane area is 359 m$^2$ compared to the prior art method which requires a diafiltering membrane area of 241 m$^2$.

**Claims**

1. A method of continuous cross-flow diafiltration of a solution containing large and small molecules wherein the solution is continuously flowing over a semipermeable membrane and separating into a concentrated solution and a filtrate, and wherein a diafiltration liquid is added to the solution; said method comprising

   (a) incorporating the semipermeable membrane into a series of at least two diafiltration stages (8a, 8b, 8c) each having an inlet (28) for the solution and an outlet (20) for the filtrate;
   (b) adding the solution to at least one first diafiltration stage (8a) located upstream the flowing solution; and
   (c) adding the diafiltration liquid (11) to at least one second diafiltration stage (8c) located further downstream the flowing solution from the at least one first diafiltration stage;

   **characterized in that**
   the filtrate from a diafiltration stage (8b,8c) is added to at least one diafiltration stage (8a,8b) located further upstream the flow of solution from the at least one second diafiltering stage through a recirculation conduit (29).

2. The method according to claim 1 wherein the diafiltration liquid is added to the inlet (28) of the at least one first diafiltration stage or to the recirculation conduit (29) to that stage.

3. The method according to claim 1 or 2 wherein the number of diafiltering stages is two or three.

4. The method according to any of the preceding claims wherein the filtrates from two or more diafiltering stages is collected and at least a part of the collected filtrates is added to the solution at a diafiltration stage located upstream the at least one second diafiltration stages.

5. The method according to claim 4 wherein the collection of filtrates and addition of at least a part thereof to the solution upstream is repeated one or more times.

6. The method according to any of the preceding claims wherein the diafiltration liquid is water.

7. The method according to claim 6 wherein the water contains sodium salts or potassium salts.

8. The method according to any of the preceding claims wherein the solution is preconcentrated in one or more initial filter stages (7a,7b).

9. The method according to any of the preceding claims wherein the concentrated solution is post concentrated in one or more terminal filter stages (10).

10. An apparatus for continuous cross-flow diafiltration of a solution containing large and small molecules; said apparatus comprising:

    (a) means (2,3,4) for continuously flowing a solution from an inlet (1) to an output (18);
    (b) at least one semipermeable membrane (8a, 8b, 8c) for separating the continuously flowing solution into a concentrated solution and a filtrate;
    (c) at least one first and at least one second diafiltration stage in series incorporating the semipermeable membrane (8a, 8b, 8c) and each having a respective inlet (28) for the solution and a respective outlet (20) for the filtrate, the at least one first stage being located further upstream of the flowing solution that the at least one second stage;

(d) means (26,5,6) for adding solution to the inlet of the at least one first diafiltration stages (8a); and

(e) means (11,12,16) for adding the diafiltration liquid to said at least one second diafiltration stage (8c);

**characterized in that**

it further comprises means (29) for circulating the filtrate from a diafiltration stage (8b,8c) to at least one diafiltration stage (8a, 8b) located further upstream the flow of solution from the at least one second diafiltering stage.

11. The apparatus according to claim 10 further comprising means (29,13) for collecting filtrates from the respective outlets (20) of the at least one first and the at least one second diafiltration stages and for adding at least a part of the collected filtrates to the solution upstream the flowing solution.

12. The apparatus according to claim 11 wherein the means (29,13) for collecting filtrates and for adding the collected filtrates to the solution conducts the collected filtrates to one or more diafiltration stages upstream the flowing solution.

13. The apparatus according to claim 11 wherein the means (29,13) for collecting filtrates and for adding the collected filtrates to the solution comprises a manifold, the outlet of which are placed so that each diafiltration stage receives filtrate from a diafiltration stages located next to it downstream or upstream the flowing solution.

14. The apparatus according to any of the preceding claims 10-13 further comprising control means (4) for controlling the flow of the flowing solution.

15. The apparatus according to any of the preceding claims 10-14 further comprising control means (5) for controlling the pressure of the flowing solution.

16. The apparatus according to any of the preceding claims 10-15 further comprising control means (13) for controlling the pressure of the collected filtrate added to the flowing solution.

17. The apparatus according to any of the preceding claims 10-16 further comprising a means for controlling the concentration of concentrated solution, the filtrate, or both.

18. The apparatus according to claim 17 wherein the means for controlling the concentration comprise a meter for measuring density, refractive index, or both of the concentrated solution or filtrate.

**Patentansprüche**

1. Verfahren für eine kontinuierliche Querstrom-Diafiltration einer große und kleine Moleküle enthaltenden Lösung, wobei die Lösung kontinuierlich über eine semipermeable Membran fließt und sich in eine konzentrierte Lösung und ein Filtrat trennt und wobei der Lösung eine Diafiltrationsflüssigkeit zugegeben wird, wobei das Verfahren umfasst:

(a) Integrieren der semipermeablen Membran in eine Reihe von mindestens zwei Diafiltrationsstufen (8a, 8b, 8c), welche jeweils einen Einlass (28) für die Lösung und einen Auslass (20) für das Filtrat aufweisen;

(b) Hinzugeben der Lösung zu mindestens einer stromaufwärts der fließenden Lösung angeordneten ersten Diafiltrationsstufe (8a); und

(c) Hinzugeben der Diafiltrationsflüssigkeit (11) zu mindestens einer zweiten Diafiltrationsstufe (8c), die von der mindestens einen ersten Diafiltrationsstufe aus weiter stromabwärts der fließenden Lösung angeordnet ist;

**dadurch gekennzeichnet, dass**

das Filtrat von einer Diafiltrationsstufe (8b, 8c) durch eine Rückführleitung (29) mindestens einer Diafiltrationsstufe (8a, 8b), die von der mindestens einen zweiten Diafiltrationsstufe aus weiter stromaufwärts des Lösungsstroms angeordnet ist, zugegeben wird.

2. Verfahren nach Anspruch 1, **dadurch gekennzeichnet, dass** die Diafiltrationsflüssigkeit dem Einlass (28) der mindestens einen ersten Diafiltrationsstufe oder der Rückführleitung (29) zu dieser Stufe zugegeben wird.

**3.** Verfahren nach Anspruch 1 oder 2, **dadurch gekennzeichnet, dass** die Anzahl an Diafiltrationsstufen zwei oder drei beträgt.

**4.** Verfahren nach einem der vorhergehenden Ansprüche, **dadurch gekennzeichnet, dass** die Filtrate von zwei oder mehr Diafiltrationsstufen gesammelt werden und dass mindestens ein Teil der gesammelten Filtrate der Lösung an einer stromaufwärts der mindestens einen zweiten Diafiltrationsstufe angeordneten Diafiltrationsstufe zugegeben wird.

**5.** Verfahren nach Anspruch 4, **dadurch gekennzeichnet, dass** das Sammeln von Filtraten und das Zugeben von mindestens einem Teil derselben zur Lösung stromaufwärts ein oder mehrere Male wiederholt wird.

**6.** Verfahren nach einem der vorhergehenden Ansprüche, **dadurch gekennzeichnet, dass** die Diafiltrationsflüssigkeit Wasser ist.

**7.** Verfahren nach Anspruch 6, **dadurch gekennzeichnet, dass** das Wasser Natriumsalze oder Kaliumsalze enthält.

**8.** Verfahren nach einem der vorhergehenden Ansprüche, **dadurch gekennzeichnet, dass** die Lösung in einer oder mehreren Anfangsfilterstufen (7a, 7b) vorkonzentriert wird.

**9.** Verfahren nach einem der vorhergehenden Ansprüche, **dadurch gekennzeichnet, dass** die konzentrierte Lösung in einer oder mehreren Endfilterstufen (10) nachkonzentriert wird.

**10.** Vorrichtung für die kontinuierliche Querstrom-Diafiltration einer große und kleine Moleküle enthaltenden Lösung, wobei die Vorrichtung umfasst:

(a) Mittel (2, 3, 4) für das kontinuierliche Fließen einer Lösung von einem Einlass (1) zu einem Ausgang (18);
(b) mindestens eine semipermeable Membran (8a, 8b, 8c) zum Trennen der kontinuierlich fließenden Lösung in eine konzentrierte Lösung und ein Filtrat;
(c) mindestens eine erste und mindestens eine zweite Diafiltrationsstufe in Reihe, die die semipermeable Membran (8a, 8b, 8c) enthalten und jeweils einen jeweiligen Einlass (28) für die Lösung und einen jeweiligen Auslass (20) für das Filtrat aufweisen, wobei die mindestens eine erste Stufe weiter stromaufwärts der fließenden Lösung als die mindestens eine zweite Stufe angeordnet ist;
(d) Mittel (26, 5, 6) für das Zugeben von Lösung zum Einlass der mindestens einen ersten Diafiltrationsstufe (8a); und
(e) Mittel (11, 12, 16) für das Zugeben der Diafiltrationsflüssigkeit zu der mindestens einen zweiten Diafiltrationsstufe (8c);

**dadurch gekennzeichnet, dass**
sie weiterhin Mittel (29) für das Umwälzen des Filtrats von einer Diafiltrationsstufe (8b, 8c) zu mindestens einer Diafiltrationsstufe (8a, 8b), die von der mindestens einen zweiten Diafiltrationsstufe aus weiter stromaufwärts des Lösungsflusses angeordnet ist, umfasst.

**11.** Vorrichtung nach Anspruch 10, welche weiterhin Mittel (29, 13) für das Sammeln von Filtraten von den jeweiligen Auslässen (20) der mindestens einen ersten und der mindestens einen zweiten Diafiltrationsstufe und für das Zugeben mindestens eines Teils der gesammelten Filtrate zu der Lösung stromaufwärts der fließenden Lösung umfasst.

**12.** Vorrichtung nach Anspruch 11, **dadurch gekennzeichnet, dass** das Mittel (29, 13) für das Sammeln von Filtraten und für das Zugeben der gesammelten Filtrate zu der Lösung die gesammelten Filtrate zu einer oder mehreren Diafiltrationsstufen stromaufwärts der fließenden Lösung leitet.

**13.** Vorrichtung nach Anspruch 11, **dadurch gekennzeichnet, dass** das Mittel (29, 13) für das Sammeln von Filtraten und für das Zugeben der gesammelten Filtrate zur Lösung ein Sammelrohr umfasst, dessen Auslass so positioniert ist, dass jede Diafiltrationsstufe Filtrat von einer neben ihr stromaufwärts oder stromabwärts der fließenden Lösung angeordneten Diafiltrationsstufe aufnimmt.

**14.** Vorrichtung nach einem der vorhergehenden Ansprüche 10 bis 13, welche weiterhin Steuermittel (4) für das Steuern des Fließens der fließenden Lösung umfasst.

**15.** Vorrichtung nach einem der vorhergehenden Ansprüche 10 bis 14, welche weiterhin Steuermittel (5) für das Steuern des Drucks der fließenden Lösung umfasst.

**16.** Vorrichtung nach einem der vorhergehenden Ansprüche 10 bis 15, welche weiterhin Steuermittel (13) für das Steuern des Drucks des der fließenden Lösung zugegebenen gesammelten Filtrats umfasst.

**17.** Vorrichtung nach einem der vorhergehenden Ansprüche 10 bis 16, welche weiterhin ein Mittel für das Steuern der Konzentration der konzentrierten Lösung, des Filtrats oder von beiden umfasst.

**18.** Vorrichtung nach Anspruch 17, **dadurch gekennzeichnet, dass** die Mittel zum Steuern der Konzentration ein Messgerät zum Messen von Dichte, Brechzahl oder beidem der konzentrierten Lösung oder des Filtrats umfassen.

## Revendications

**1.** Procédé de diafiltration par écoulement croisé continu d'une solution contenant des grosses et des petites molécules, dans lequel la solution s'écoule continuellement à travers une membrane semi-perméable et se sépare en une solution concentrée et un filtrat, et dans lequel un liquide de diafiltration est ajouté à la solution, ledit procédé comprenant

(a) la mise en oeuvre de la membrane semi-perméable dans une série d'au moins deux étapes de diafiltration (8a, 8b, 8c), chaque étape ayant une entrée (28) pour la solution et une sortie (20) pour le filtrat;
(b) l'addition de la solution à au moins une première étape de diafiltration (8a) située en amont de la solution qui s'écoule; et
(c) l'addition du liquide de diafiltration (11) à au moins une seconde étape de diafiltration (8c) située plus en aval de la solution qui s'écoule à partir de la première étape de diafiltration,

**caractérisé en ce que**
le filtrat d'une étape de diafiltration (8b, 8c) est ajouté à au moins une étape de diafiltration (8a, 8b) située plus en amont de l'écoulement de la solution à partir de la seconde étape de diafiltration à travers un conduit de recirculation (29).

**2.** Procédé selon la revendication 1, dans lequel le liquide de diafiltration est ajouté à l'entrée (28) de la première étape de diafiltration ou au conduit de recirculation (29) à cette étape.

**3.** Procédé selon la revendication 1 ou 2, dans lequel le nombre d'étapes de diafiltration est deux ou trois.

**4.** Procédé selon l'une quelconque des revendications précédentes, dans lequel les filtrats provenant de deux ou plus de deux étapes de diafiltration sont rassemblés et au moins une partie des filtrats rassemblés est ajoutée à la solution à une étape de diafiltration située en amont de la seconde étape de diafiltration.

**5.** Procédé selon la revendication 4, dans lequel la récupération de filtrats et l'addition d'au moins une partie des ces filtrats à la solution en amont est répétée une ou plusieurs fois.

**6.** Procédé selon l'une quelconque des revendications précédentes, dans lequel le liquide de diafiltration est de l'eau.

**7.** Procédé selon la revendication 6 dans lequel l'eau contient des sels de sodium ou des sels de potassium.

**8.** Procédé selon l'une quelconque des revendications précédentes, dans lequel la solution est pré-concentrée par une ou plusieurs étape(s) de filtration initiale(s) (7a, 7b).

**9.** Procédé selon l'une quelconque des revendications précédentes, dans lequel la solution concentrée est post-concentrée par une ou plusieurs étape(s) de filtration terminale(s) (10).

**10.** Appareil destiné à la diafiltration par écoulement croisé continu d'une solution contenant des grosses et des petites molécules, ledit appareil comprenant :

(a) des moyens (2, 3, 4) pour l'écoulement continu d'une solution à partir d'une entrée (1) vers une sortie (18);

(b) au moins une membrane semi-perméable (8a, 8b, 8c) pour séparer la solution s'écoulant continuellement en une solution concentrée et un filtrat;

(c) au moins une première et au moins une seconde étapes de diafiltration en séries mettant en oeuvre la membrane semi-perméable (8a, 8b, 8c) et ayant chacune une entrée respective (28) pour la solution et une sortie respective (20) pour le filtrat, la première étape étant située plus en amont de la solution qui s'écoule que la seconde étape;

(d) des moyens (26, 5, 6) pour ajouter la solution à l'entrée de la première étape de diafiltration (8a); et

(e) des moyens (11, 12, 16) pour ajouter le liquide de diafiltration à ladite seconde étape de diafiltration (8c);

**caractérisé en ce que**

il comprend en outre des moyens (29) pour faire circuler le filtrat d'une étape de diafiltration (8b, 8c) vers au moins une étape de diafiltration (8a, 8b) située plus en amont de l'écoulement de la solution à partir de la seconde étape de diafiltration.

**11.** Appareil selon la revendication 10 comprenant en outre des moyens (29,13) pour rassembler les filtrats à partir des sorties respectives (20) de la au moins première et de la au moins seconde étapes de diafiltration, et pour ajouter au moins une partie des filtrats rassemblés à la solution en amont de la solution qui s'écoule.

**12.** Appareil selon la revendication 11 dans lequel les moyens (29,13) pour rassembler les filtrats et pour ajouter les filtrats rassemblés à la solution conduisent les filtrats rassemblés à une ou plusieurs étape(s) de diafiltration en amont de la solution qui s'écoule.

**13.** Appareil selon la revendication 11 dans lequel les moyens (29,13) pour rassembler les filtrats et pour ajouter les filtrats rassemblés à la solution comprennent une tubulure, dont la sortie est placée de façon à ce que chaque étape de diafiltration reçoive du filtrat provenant d'une étape de diafiltration voisine située en aval ou en amont de la solution qui s'écoule.

**14.** Appareil selon l'une quelconque des revendications 10-13 précédentes, comprenant en outre des moyens de régulation (4) pour réguler le flux de la solution qui s'écoule.

**15.** Appareil selon l'une quelconque des revendications 10-14 précédentes, comprenant en outre des moyens de régulation (5) pour réguler la pression de la solution qui s'écoule.

**16.** Appareil selon l'une quelconque des revendications 10-15 précédentes, comprenant en outre des moyens de régulation (13) pour réguler la pression du filtrat rassemblé ajouté à la solution qui s'écoule.

**17.** Appareil selon l'une quelconque des revendications 10-16 précédentes, comprenant en outre des moyens pour réguler la concentration de la solution concentrée, du filtrat, ou des deux.

**18.** Appareil selon la revendication 17, dans lequel les moyens pour réguler la concentration comprennent un appareil pour mesurer la densité, l'index de réfraction, ou la densité et l'index de réfraction de la solution concentré ou du filtrat.

Prior Art

**Fig. 2**

Prior Art

**Fig. 1**

**Fig. 3**

**Fig. 4**

**Fig. 5**